# EUROPEAN PATENT SPECIFICATION

(11) **EP 1 513 900 B1**
(45) Date of publication and mention of the grant of the patent: **08.02.2006**
(21) Application number: 03733445.5
(22) Date of filing: 16.06.2003
(51) Int. Cl.: C09D 4/00, C08G 61/12

(54) **STORAGE STABLE CURABLE COMPOSITION**
LAGERSTABILE VERNETZBARE ZUSAMMENSETZUNGEN ZUR BESCHICHTUNG
COMPOSITION DURCISSABLE A LONGUE DUREE DE STOCKAGE

(30) Priority: 14.06.2002 EP 02013480
(43) Date of publication of application: 16.03.2005
(73) Proprietor: Dainippon Ink & Chemicals, Inc., Tokyo 174-0043 (JP)
(72) Inventor: LACHOWICZ, Artur, D-13467 Berlin (DE); GAUDL, Kai-Uwe, D-16540 Hohen Neuendorf (DE); YATSUGI, Ken-ichi, Tokyo 174-0051 (JP); TAKAHASHI, Masaharu, 1020 Wien (AT); GRAHE, Gerwald, F., D-14195 Berlin (DE)
(74) Representative: Albrecht, Thomas
(86) International application number: PCT/JP2003/007619
(87) International publication number: WO 2003/106570

(56) References cited:
- EP-A- 0 448 154
- EP-A- 0 808 860
- US-A- 4 408 018

## Description

### TECHNICAL FIELD

This invention relates to curable compositions, which are particularly usable for coatings, comprising compounds containing activated unsaturated groups, compounds containing activated hydrogen atoms, tertiary alkyl phosphines and carboxylic acids. The compositions can be cured at low temperatures and show at the same time good storage stability at room temperature.

### BACKGROUND ART

Coating compositions containing activated unsaturated groups and activated hydrogen atoms are known, in general, from several references.

An early example is German Patent No. DE-PS 835809, which discloses a process for production of products derived from compounds containing activated hydrogen atoms, including activated methylene groups, and activated double bonds.

U.S. Patent No. 2,759,913 discloses a composition of the above type, which may be prepared at ambient and elevated temperatures. More specifically, the reference generally describes the production of polymeric materials prepared from compounds containing at least two activated ethylenic double bonds and components containing at least two activated hydrogen atoms. Active hydrogen atoms include those present in activated methylene groups. Activated methylene groups have electron withdrawing groups in the α-position, such as carbonyl or ester groups, such as in acetoacetates.

U.S. Patent No. 4,602,061 describes a similar composition except that the component containing activated methylene groups is specifically described as an oligomeric or polymeric ester containing malonate groups.

U.S. Patent No. 4,408,018 discloses acrylic polymers into which acetoacetate groups have been introduced and which may be crosslinked with ethylenically unsaturated esters in the presence of strong alkaline catalysts via the Michael addition reaction. The introduction of the acetoacetate group is effected via the acetoacetic esters of hydroxyalkylacrylates and subsequent copolymerization with further copolymerizable monomers, or by reacting polymers containing hydroxyl groups with the precursor of the acetoacetic ester component, diketene. Acrylated polyester, containing more than two acrylate groups, may then be crosslinked with the polymers containing the acetoacetate groups.

U.S. Patent No. 4,871,822 discloses an extension of the prior art by using various catalysts to improve handling and properties of reaction products of ethylenically unsaturated compounds with compounds containing active hydrogen atoms. The components containing active hydrogen atoms include those such as activated methylene groups, as in acetoacetates and malonates.

In U.S. Patent No. 5,017,649, systems are described containing activated hydrogen atoms, present in β-dicarbonyl compounds, and activated unsaturated groups. The curing is catalyzed by strong basic amines having an amidine structure, such as 1,8-diazabicyclo(5.4.0)undec-7-ene (DBU), and which enable hardening of coating compositions at temperatures even below room temperature.

U.S. Patent No. 5,496,896 reveals curable compositions based on the Michael addition, which may also be cured at room temperature and which are useful in automobile refinishing.

All of the aforementioned specifications describe products useful as coating materials. The basis for this application is the "so-called" Michael addition, which enables the crosslinking of resins under mild conditions (curing at low temperatures), without any splitting product. Therefore, this reaction is considered as a replacement for the isocyanate-alcohol reaction in such cases where isocyanates are difficult to use, since they may exhibit a considerable environmental health hazard.

However, a drawback of the Michael addition is that, similar to the isocyanate-alcohol system, due to the high reactivity, the pot-life, or in other words, the storage stability and the processing time of the curable mixtures are limited. In U.S. Patent No. 4,408,018, pot lives from 11 minutes to 72 hours are reported (column 4, Table III), in U.S. Patent No. 4,871,822 pot lives between 5 minutes and 12 hours are described (column 10, lines 36-38), and in U.S. Patent No. 5,017,649 pot lives between 6 and 12 hours are disclosed (column 6, lines 11-14). Therefore, in general, only so-called "2-component systems" are feasible, wherein the catalyst is added just before the application of the coating composition or the reactive components are stored separately and mixed just before the application of the coating.

However, the desired so-called "1-component" ambient temperature curable coating compositions, which are ready to use but which are at the same time long term storage stable (several months), were not achieved. Furthermore, in addition to the lack of storage stability, the formulation of highly reactive "2-component systems" just prior to the application of the coating is a demanding and tricky process, since the crosslinking may already start during blending but prior to the application of the coating, which is absolutely not desired by the "end user".

Another drawback is that the Michael addition requires a strong basic catalyst, as outlined in U.S. Patent No. 4,408,018 (column 2, lines 7-18), such as potassium hydroxide, organic ammonium hydroxides, or sodium methoxide. These catalysts are known to impart cloudiness to the lacquer due to bad solubility, as well as considerable yellowing, as known, for example, from U.S. Patent 4,871,822 (column 1, line 67 through column 2, line 3). Strong alkaline amine catalysts, such as 1,8-diazabicyclo(5.4.0)undec-7-ene, 1,5-diazabicyclo(4.3.0)non-5-ene, or tetramethylguanidine, which are known from the previously mentioned U.S. Patent No. 5,017,649, are more soluble in organic coatings, but they also reduce the hydrolytic stability of the coatings. This is known from Journal of Coatings Technology, Vol. 61, No. 770, March 1989, page 89. The sensitivity of polyesters towards hydrolysis in the presence of strong alkaline catalysts was also described in a product information bulletin from Eastman Kodak Company: "The Utility of Acetoacetoxyethyl Methacrylate (AAEM) in Thermoset Coatings" (page 14, last section: "Michael addition").

### DISCLOSURE OF INVENTION

Therefore, the object of the present invention is to provide curable compositions, particularly usable for coatings, which can be crosslinked at low temperatures or room temperature but which are, on the other hand, also storage stable at room temperature, and which do not suffer from the drawbacks of strong basic catalysts, which may impart yellowing, cloudiness, and hydrolysis instability to the coating.

According to the invention, the object is achieved by the curable compositions of this invention which is:
A curable composition comprising:
   (i) a compound (A) having at least two unsaturated groups which are activated for Michael addition,
   (ii) a compound (B) having at least two activated hydrogen atoms,
   (iii) a tertiary alkyl phosphine (C), and
   (iv) a carboxylic acid (D).

According to the invention, a crosslinked coating is also provided which is obtained from the above curable composition.

### BEST MODE FOR CARRYING OUT THE INVENTION

The compound (A) having at least two unsaturated groups which are activated for Michael addition represents compounds containing activated unsaturated groups which work as a Michael addition acceptor. Ethylenically unsaturated compounds, in which the carbon-carbon double bond is activated by an electron attracting group such as a carbonyl group and cyano group in the α-position, may be generally mentioned as suitable compounds.

Especially suitable are oligomeric and polymeric esters of acrylic acid having at least two acrylate groups. They are commercially available from several vendors under the names of polyesteracrylates, urethaneacrylates, and epoxyacrylates. Suitable also are monomeric acrylates which contain at least two acrylate groups and which act as crosslinkers between compounds containing activated methylene groups. Examples of such compounds are 1,4-butandiol diacrylate, 1,6-hexandiol diacrylate, dipropylene glycol diacrylate, neopentylglycol diacrylate, ethoxylated neopentylglycol diacrylate, propoxylated neopentylglycol diacrylate, tripropylene glycol diacrylate, bisphenol-A diacrylate, ethoxylated bisphenol-A diacrylate, poly(ethylene)glycol diacrylate, trimethylolpropane triacrylate, ethoxylated trimethylolpropane triacrylate, propoxylated trimethylolpropane triacrylate, propoxylated glycerol triacrylate, tris(2-hydroxyethyl)isocyanurate triacrylate, pentaerythritol triacrylate, ethoxylated pentaerythritol triacrylate, pentaerythritol tetraacrylate, ethoxylated pentaerythritol tetraacrylate, ditrimethylolpropane tetraacrylate, dipentaerythritol pentaacrylate, dipentaerythritol hexaacrylate, or mixtures thereof. Instead of acrylates, methacrylates, and esters of crotonic acid and cinnamic acid may be used as well. These esters may optionally contain hydroxyl groups. Furthermore, suitable compounds for compound (A) also include polyesters based on maleic, fumaric and/or itaconic acid, and/or maleic and/or itaconic anhydride. Representative examples of compound (A), cited by the prior art, are described in U.S. Patents Nos. 2,759,913 (column 6, line 35 through column 7, line 45), 4,871,822 (column 2, line 14 through column 4, line 14), 4,602,061 (column 3, lines 14-55) and 4,408,018 (column 2, lines 19-68).

As explained before, the suitable compounds of compound (A) containing unsaturated groups which are activated for Michael addition, are generally known to those skilled in the art.

Preferred among the above-exemplified compound (A) are trimethylolpropane triacrylate, tripropylene glycol diacrylate, or pentaerythritol tetraacrylate, from the viewpoint of reactivity and commercial availability.

The compound (B) having at least two activated hydrogen atoms represents compounds which contain activated hydrogen atoms.

Activated hydrogen atoms are those which are bound to a carbon atom, which itself is located in the α-position with respect to electron withdrawing groups. Preferred are activated hydrogen atoms which are part of an activated methylene group having two carbonyl groups in the α-position.

Examples of such materials are acetoacetate and malonate oligomers or polymers obtained by transesterification of acetoacetic acid alkylesters or malonate dialkylesters with oligomeric or polymeric polyols, and acetoacetate group-containing oligomers and polymers obtained by copolymerization of 2-acetoacetoxyethyl methacrylate (AAEM). Various examples of such compounds are further described in the specifications of the prior art such as in U.S. Patent No. 4,871,822 (column 4, line 15 through column 5, line 45), where the compounds contain a methylene and/or monosubstituted methylene group in the α-position with respect to two activating groups such as, carbonyl, cyano, or nitro groups. Preferred are compounds containing a methylene group in the α-position with respect to two carbonyl groups, such as malonate and/or acetoacetate group-containing compounds. As preferred examples of malonate group-containing compounds, malonic acid esters as disclosed in previously mentioned U.S. Patent No. 4,602,061 (column 2, line 10 through column 3 line 13, may be mentioned. Preferred are the oligomeric and/or polymeric malonate group-containing compounds such as polyurethanes, polyesters, polyacrylates, epoxy resins, polyamides, and polyvinyl resins containing malonate groups in the main chain, pendant, or both.

As examples of compounds containing acetoacetate groups, acetoacetic esters as disclosed in U.S. Patent No. 2,759,913 (column 8, lines 53-54) diacetoacetate compounds as disclosed in U.S. Patent No. 4,217,396 (column 2, line 65 through column 3, line 27, the contents of which are incorporated herein by reference), and acetoacetate group-containing oligomeric and polymeric compounds as disclosed in U.S. Patent No. 4,408,018 (column 1, line 51 through column 2, line 6) may be mentioned. Preferred are the oligomeric and/or polymeric acetoacetate group-containing compounds.

Especially preferred for the present invention are compounds containing acetoacetate groups containing at least 2 acetoacetate groups. It is also especially preferred that such acetoacetate group-containing compounds have a number average molecular weight in the range of from about 230 to 50,000. The preferable range of molecular weight depends on the selected application; more specifically, for low-viscous liquid curable coating compositions, the number average molecular weight of the compound (B) having at least two activated hydrogen atoms should be preferably in the range between 230 and 2,000. For solid powder coating systems, the number average molecular weight of the compound (B) having at least two activated hydrogen atoms could be preferably in the range between 1,000 and 40,000.

Compounds containing both malonate and acetoacetate groups in the same molecule are also suitable and can be obtained, for example, by the Michael addition between a malonate functional polyester and an acetoacetate functional acrylic compound (e.g., acetoacetoxyethyl acrylate). Additionally, simple mixtures of malonate and acetoacetate group-containing compounds are suitable as well. Low molecular weight alkyl acetoacetates and malonates, such as ethyl acetoacetate and dimethyl malonate, may also be used as reactive diluents.

The compound (B), which includes the aforementioned and other malonate and/or acetoacetate group-containing compounds and their methods of production, are generally known to those skilled in the art.

The tertiary alkyl phosphine (C) may be aliphatic, cycloaliphatic, or of mixed character.

Suitable examples include tributylphosphine, triisobutylphosphine, tri-tertiary-butylphosphine, tris(2,4,4-trimethylpentyl)phosphine, tricyclopentylphosphine, tricyclohexylphosphine, tri-n-octylphosphine (TOP), tri-n-Dodecylphosphine.

In contrast to aliphatic tertiary phosphines, aromatic tertiary phosphines show very low catalytic activity, if any.

From the viewpoint of handling, safety, and environmental properties (e.g., a low vapor pressure), tri-n-octylphosphine (TOP) and tri-n-dodecylphosphine are particularly preferable.

The aforementioned phosphines are commercially available or may be prepared according to standard methods of organic chemistry such as Grignard reaction of alkylhalogenides with phosphorous trichloride or catalytic addition of alkenes to phosphane.

The carboxylic acid (D) represents compounds containing carboxylic acid groups.

Various carboxylic acids can be used in the curable compositions of this invention, which carboxylic acids can extend the pot-life of the mixture considerably and make them storage stable at ambient temperature. Among these, some carboxylic acids are preferred for the curing at elevated temperatures above 100°C, such as formic acid; acetic acid, propionic acid, pentanoic acid, hexanoic acid, malonic acid, cyanoacetic acid, nitroacetic acid, phenylacetic acid, α-oxoacetic acid, acrylic acid, methacrylic acid, maleic acid, succinic acid, and glyoxylic acid.

Preferred among them is a saturated fatty acid having a molecular weight of 80 or less, such as formic acid, acetic acid, or propionic acid, especially for curing at low temperatures below 100°C or even at room temperature.

The curable compositions of this invention are prepared by blending, mixing, or dissolving the aforementioned compound (A), compound (B), tertiary alkyl phosphine (C), and carboxylic acid (D) at room temperature. Important is the sequence of the addition of compound (A), compound (B), tertiary alkyl phosphine (C), carboxylic acid (D). In general, carboxylic acid (D) must be present in a system which is able to react (both components A+B are present) before the addition of tertiary alkyl phosphine (C).

Thus, a preferable method for the preparation of the curable composition comprises mixing compound (A), compound (B), tertiary alkyl phosphine (C), and carboxylic acid (D) in an arbitrary order with the proviso that tertiary alkyl phosphine (C) is added after the addition of carboxylic acid (D).

In a further embodiment, the mixture of tertiary alkyl phosphine (C) and carboxylic acid (D) is prepared separately and the mixture is then mixed with compound (A) and compound (B) in an arbitrary order.

After the addition of each component, the mixture is thoroughly stirred in order to finely disperse or dissolve the components in each other before the addition of the next component is processed. As mentioned above, the addition of tertiary alkyl phosphine (C) to a solution of (A+B) before adding carboxylic acid (D) may result in an immediate increase in viscosity and formation of gel particles, so that the curable coating composition can no longer be applied. The amount of tertiary alkyl phosphine (C) is 0.1-10% by weight, preferably 0.2-2.0% by weight of the total weight of the curable coating composition. The amount of carboxylic acid (D) depends on the amount of tertiary alkyl phosphine (C). The equivalent of the carboxylic acid groups of carboxylic acid (D) should exceed the equivalent of the phosphine compounds of tertiary alkyl phosphine (C). For good long term storage stability, the carboxylic acid group equivalent may be applied in an excess of at least 50%.

The equivalent ratio of activated unsaturated groups from compound (A) and activated hydrogen atoms from compound (B) is idealized 1:1, since one active hydrogen atom is able to react with one acrylate group. Suitable ratios of the unsaturated groups from compound (A) and the activated hydrogen atoms from compound (B) (former:latter), which give crosslinked products, are from 4:1 to 1:4, preferably 1.5:1 to 0.75:1.

The curable compositions of this invention are storage stable at ambient temperature but can also be cured over a wide range of temperatures even at room temperature.

Preferably, the crosslinking can be done at elevated temperatures in the range of 60-200°C, and especially interesting is the curing in the range of 80-120°C. At these moderate temperatures, the crosslinking may proceed unexpectedly fast. Often, within a baking time of 10-15 minutes, the cured products such as coatings reach their maximum hardness and solvent resistance. Such curing systems are particularly suitable for the coating of temperature sensitive substrates such as wood and plastics, as well as coating compositions for automotive repair finishing.

Furthermore, the curable coating composition of this invention does not require the use of strong basic catalysts such as potassium hydroxide, organic ammonium hydroxides, sodium methoxide, 1,8-diazabicyclo(5.4.0)undec-7-ene, 1,5-diazabicyclo(4.3.0)non-5-ene or tetramethylguanidine, which are known to impart yellowing, cloudiness, and hydrolytic instability to the lacquer. However, these strong basic catalysts may be contained in small amounts as long as the effects of the present invention are not impaired

The curable compositions of this invention are applicable for various use such as coatings, binder components in varnishes, adhesives, paints, and printing inks. Among them, the curable compositions are particularly usable for coatings, and may be applied as coatings to various kinds of substrates, for example, to substrates of an organic or inorganic nature, such as plastics, glass, ceramics, building materials such as concrete, fiberboards or artificial stone, wood, wood fiber materials, textiles of natural or synthetic origin, and metal. The coatings may also be employed for household articles and equipment, for example, refrigeration equipment, washing machines, electrical equipment, windows, doors, furniture, or the like. Coating application may be carried out by brushing, spraying, rolling, dipping, or electrostatic means. The curable coating compositions of this invention may also contain customary additives, such as pigments, fillers, dyestuffs, plastizers, stabilizers, leveling agents, neutralizing substances such as tertiary amines, and catalysts, and these can be used in the customary amounts. These substances may be added to the individual components and/or to the total mixture. Examples of dyestuffs or pigments, which may be of inorganic or organic nature, are: titanium dioxide, graphite, carbon black, zinc chromate, strontium chromate, barium chromate, lead chromate, lead cyanamide, lead silicochromate, calcium molybdate, manganese phosphate, zinc oxide, cadmium sulfide, chromic oxide, zinc sulfide, nickel titanium yellow, chromium titanium yellow, red, oxide of iron, black oxide of iron, ultramarine blue, phthalocyanine complexes, naphthol red or the like. Examples of suitable fillers are powdered quartz, powdered asbestos, talc, mica, kaolin, chalk, barium sulfate, various grades of silica, silicates, or the like. The customary solvents are, for example, aliphatic and aromatic hydrocarbons, ethers, esters, glycol ethers and esters thereof, ketones, chlorinated hydrocarbons, terpene derivatives such as toluene or xylene, ethyl acetate, butyl acetate, ethylene glycol monoethyl ether-acetate, ethylene glycol monobutyl ether-acetate, ethylene glycol dimethyl ether, diethylene glycol dimethyl ether, cyclohexanone, methyl ethyl ketone, acetone, isophorone or mixtures thereof. Preferred are solvents which contain activated unsaturated double bonds and/or activated hydrogen atoms serving as reactive diluents, such as trimethylolpropane triacrylate, tripropylene glycol diacrylate, ethyl acetoacetate, or dimethyl malonate.

This invention will be further explained in consideration of the following examples.

### EXAMPLES:

### Example 1

100 ml of toluene was sparged with nitrogen and heated to 90°C. Then, a solution of 60.0 g of methyl methacrylate, 20.0 g of butyl acrylate, 20.0 g of 2-acetoacetoxyethyl methacrylate, and 1.50 g of azobisisobutyronitril (AIBN) was dropped into hot toluene over 3 hours. Then, the mixture was stirred for another three hours. After cooling to room temperature a viscous resin was obtained containing a copolymer having pendant acetoacetate groups, which represents compound (B), (molecular number average: Mn = 16,000; glass transition temperature: Tg = 38°C). To that resin, 30.0 g of trimethylolpropane triacrylate (compound (A)) was added and dissolved followed by 0.7 g of formic acid (carboxylic acid (D)) and 2.0 g of trioctylphosphine (tertiary alkyl phosphine (C)). The mixture was adjusted with additional toluene until a coating viscosity of 200 mPas at 25°C was reached. The final curable coating composition was applied on top of an aluminum specimen at a coating thickness of approximately 40 µm and cured under two different conditions at 75°C for 30 minutes and at 120°C for 30 minutes.

| Solvent resistance¹ / Pencil hardness² (75°C/30 min) | Solvent resistance¹ / Pencil hardness² (120°C/30 min) | Storage Stability at Room Temp. |
|---|---|---|
| 50 | >200 | > 6 months |
| 2H | 3H | |

| | | |
|---|---|---|
| ¹Solvent resistance of the hardened coating, tested by repeated rubbing of the film surface with a woodpulp cloth impregnated with methyl ethyl ketone (MEK). The number of rubbings that still did not produce any visible damage to the coating was measured. | | |
| ²Pencil hardness (measured according to ASTM procedure D3363) | | |

### Examples 2-8

General procedure: 5.00 g of trimethylolpropane triacrylate (compound (A)) was mixed with 5.00 g of the diacetoacetate (compound (B)), 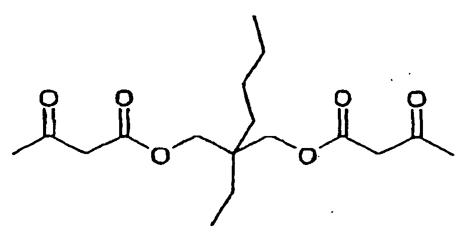 which was prepared by transesterification of ethyl acetoacetate and 2-butyl-2-ethyl-1,3-propane diol. To that mixture, 1.0 mmol of a carboxylic acid (carboxylic acid (D), see Table 1 below, column 3) was added and completely dissolved. Then, 0.5 mmol of a phosphine compound (tertiary alkyl phosphine (C), see Table 1 below, column 2) was added dropwise while stirring. The final curable coating composition was applied on top of an aluminum specimen at a coating thickness of approximately 40 µm and cured under three different conditions: at room temperature for 7 days, at 80°C for 30 minutes, and at 140°C for 20 minutes. The solvent resistance and the pencil hardness of the cured coatings as well as the storage stability of the curable coating compositions are shown in Table 1 below in columns 4-7.

**Table 1:**

| Example | Tertiary alkyl phosphine (C) | Carboxylic acid (D) | Solvent resist.¹/ Pencil hardness² (25°C/ 7 days) | Solvent resist.¹/ Pencil hardness² (80°C/ 30 min) | Solvent resist.¹/ Pencil hardness² (140°C/ 20 min) | Storage Stability at Room Temp. |
|---|---|---|---|---|---|---|
| 2 | TOP | Formic acid | 25 | 30 | >50 | >6 months |
| | | | H | 2H | 2H | |
| 3 | TCHP | Acetic acid | 15 | 30 | 50 | 4 months |
| | | | H | 2H | 2H | |
| 4 | TOP acid | Malonic | no cure | 3 | 10 | >6 months |
| | | | | H | 2H | |
| 5 | TOP | Acetic acid | 15 | 40 | > 50 | 3 months |
| | | | 6B | H | 2H | |
| 6 | TCHP | Malonic acid | no cure | 2 | 8 | 6 months |
| | | | | HB | 2H | |
| 7 | TCHP | Formic acid | 30 | 40 | > 50 | > 6 months |
| | | | H | 2H | 2H | |
| 8 | TOP | Glyoxylic acid | no cure | 39 | >50 H | 2 months |
| | | | | H | H | |

| | | | | | | |
|---|---|---|---|---|---|---|
| ¹Solvent resistance of the hardened coating, tested by repeated rubbing of the film surface with a woodpulp cloth impregnated with methyl ethyl ketone (MEK). The number of rubbings that still did not produce any visible damage to the coating was measured. | | | | | | |
| ²Pencil hardness (measured according to ASTM procedure D3363) TOP = trioctylphosphine TCHP = tricyclohexylphosphine | | | | | | |

### Examples 9-12

General procedure: 5.00 g of trimethylolpropane triacrylate (compound (A)) was mixed with 7.50 g of the oligomeric malonate depicted below (compound (B), molecular weight ~1.000), 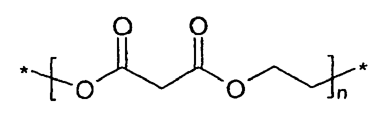 which was prepared by transesterification of dimethyl malonate and ethylene glycol. To that mixture, 1.00 mmol of a carboxylic acid (carboxylic acid (D), see Table 2 below, column 3) was added and completely dissolved. Then, 0.50 mmol trioctyl phosphine was added dropwise while stirring. The final curable coating composition was applied on top of an aluminum specimen at a coating thickness of approximately 40 µm and cured under two different conditions: at 100°C for 30 minutes and at 145°C for 20 minutes. The solvent resistance and the pencil hardness of the cured coatings as well as the storage stability of the curable coating compositions are shown in Table 2 below in columns 4-6.

**Table 2:**

| Example | Tertiary alkyl phosphine (C) | carboxylic acid (D) | Solvent resist. ¹/ Pencil hardness² (100°C/30 min) | Solvent resist. ¹/ Pencil hardness² (145°C/20 min) | Storage Stability at Room Temp. |
|---|---|---|---|---|---|
| 9 | TOP | Formic acid | 25 | >50 | 6 months |
| | | | H-B | H-2H | |
| 10 | TOP | Acetic acid | 20 | 40 | 4 months |
| | | | 3B | H | |
| 11 | TOP | Malonic acid | 3 | 50 | 6 months |
| | | | 3B | H-2H | |
| 12 | TOP | Glyoxylic acid | 20 | - 50 | 3 months |
| | | | H | 2H | |

| | | | | | |
|---|---|---|---|---|---|
| ¹Solvent resistance of the hardened coating, tested by repeated rubbing of the film surface with a woodpulp cloth impregnated with methyl ethyl ketone (MEK). The number of rubbings that still did not produce any visible damage to the coating was measured. | | | | | |
| ²Pencil hardness (measured according to ASTM procedure D3363) | | | | | |

### INDUSTRIAL APPLICABILITY

The products of this invention are useful as coating materials or as materials to make binder components in varnishes, adhesives, paints, and printing inks.

## Claims

1. (Amended) A curable composition comprising:
(i) a compound (A) having at least two unsaturated groups which are activated for Michael addition,
(ii) a compound (B) having at least two activated hydrogen atoms,
(iii) a tertiary alkyl phosphine (C), and
(iv) a carboxylic acid (D).

2. A curable composition according to claim 1, wherein the molar ratio of the unsaturated groups from the compound (A) and the activated hydrogen atoms from the compound (B) (former:latter) is in a range from 4:1 to 1:4.

3. A curable composition according to claim 1, wherein the tertiary alkyl phosphine (C) is present in an amount of 0.1-10% by weight.

4. A curable composition according to claim 1, wherein the carboxylic acid (D) is present in an amount of 0.05-10% by weight.

5. A curable composition according to claim 1, wherein the carboxylic acid (D) is a saturated fatty acid having a molecular weight of 80 or less.

6. A crosslinked coating obtained from the curable composition according to claims 1-5.

## Patentansprüche

1. Härtbare Zusammensetzung, umfassend:
(i) eine Verbindung (A) mit mindestens zwei ungesättigten Gruppen, die für eine Michael-Addition aktiviert sind,
(ii) eine Verbindung (B) mit mindestens zwei aktivierten Wasserstoffatomen,
(iii) ein tertiäres Alkylphosphin (C) und
(iv) eine Carbonsäure (D).

2. Härtbare Zusammensetzung nach Anspruch 1, wobei das molare Verhältnis der ungesättigten Gruppen von der Verbindung (A) zu den aktivierten Wasserstoffatomen von der Verbindung (B) (Erstgenannte:Letztgenannte) im Bereich von 4:1 bis 1:4 liegt.

3. Härtbare Zusammensetzung nach Anspruch 1, wobei das tertiäre Alkylphosphin (C) in einer Menge von 0,1 bis 10 Gew.-% vorhanden ist.

4. Härtbare Zusammensetzung nach Anspruch 1, wobei die Carbonsäure (D) in einer Menge von 0,05 bis 10 Gew.-% vorhanden ist.

5. Härtbare Zusammensetzung nach Anspruch 1, wobei die Carbonsäure (D) eine gesättigte Fettsäure mit einem Molekulargewicht von 80 oder kleiner ist.

6. Vernetztes Beschichtungsmittel, erhalten aus der härtbaren Zusammensetzung nach den Ansprüchen 1 bis 5.

## Revendications

1. Composition durcissable comprenant :
- (i) un composé (A) ayant au moins deux groupes insaturés qui sont activés par l'addition de Michael,
- (ii) un composé (B) ayant au moins deux atomes d'hydrogène activés,
- (iii) une alkylphosphine tertiaire (C) et
- (iv) un acide carboxylique (D).

2. Composition durcissable selon la revendication 1, dans laquelle le rapport molaire des groupes insaturés du composé (A) et des atomes d'hydrogène activés du composé (B) (premier:second) est dans l'intervalle de 4:1 à 1:4.

3. Composition durcissable selon la revendication 1, dans laquelle l'alkylphosphine tertiaire (C) est présente en quantité de 0,1 à 10 % en poids.

4. Composition durcissable selon la revendication 1, dans laquelle l'acide carboxylique (D) est présent en quantité de 0,05 à 10 % en poids.

5. Composition durcissable selon la revendication 1, dans laquelle l'acide carboxylique (D) est un acide gras saturé ayant un poids moléculaire de 80 ou moins.

6. Revêtement réticulé obtenu à partir de la composition durcissable selon la revendication 1.
